# EUROPÄISCHE PATENTSCHRIFT

(11) **EP 2 384 914 B1**
(45) Veröffentlichungstag und Bekanntmachung des Hinweises auf die Patenterteilung: **22.08.2012**
(21) Anmeldenummer: 10004628.3
(22) Anmeldetag: 03.05.2010
(51) Int. Cl.: B60D 5/00, B61D 17/20

(54) **Gelenkfahrzeug, insbesondere Schienenfahrzeug**
Articulated vehicle, in particular rail vehicle
Véhicule articulé, notamment véhicule sur rails

(43) Veröffentlichungstag der Anmeldung: 09.11.2011
(73) Patentinhaber: Hübner GmbH, D-34123 Kassel (DE)
(72) Erfinder: Richter, Olaf, 34323 Malsfeld-Beiseförth (DE)
(74) Vertreter: Walther, Walther & Hinz GbR

(56) Entgegenhaltungen:
- EP-A1- 0 032 079
- EP-A1- 1 864 834
- EP-A2- 0 380 961
- DE-U1- 29 914 865
- DE-U1-202006 007 377
- US-B1- 6 401 626

## Beschreibung

Die Erfindung betrifft ein Gelenkfahrzeug, insbesondere ein Schienenfahrzeug, wobei zwischen zwei Fahrzeugenteilen ein die beiden Fahrzeugteile verbindendes Gelenk angeordnet ist.

Gelenkfahrzeuge der eingangs genannten Art sind aus dem Stand der Technik hinreichend bekannt. Insbesondere sind Schienenfahrzeuge, z. B. Straßenbahnzüge oder auch Gelenkbusse, bekannt. Bei schienengebundenen Fahrzeugen ist es so, dass die Verkehrsbetriebe einer jeden Stadt einen unterschiedlichen Wagentyp wünschen. Unterschiedliche Fahrzeuge mit unterschiedlichen Wagenkasten bedingen nach dem Stand der Technik jeweils die Konstruktion eines gesonderten Gelenkes. Insofern sind die Stückzahlen für die Herstellung der Gelenke für eine solche Zugserie relativ gering. Dies hat zur Folge, dass im Wesentlichen Gussgelenke zum Einsatz kommen, die allerdings den Nachteil haben, dass die Prüfung solcher Gussgelenke im Hinblick auf Risse und Lunker sehr aufwendig ist. Die Kosten für eine solche röntgentechnische Untersuchung sind z. T. genauso hoch wie die Kosten für die Herstellung des Gussteils selbst.

In diesem Zusammenhang ist aus der DE 20 2006 007 377 U1 ein Gelenk bestehend aus zwei Gelenkteilen bekannt, die unmittelbar an den jeweiligen Wagenkästen angeordnet sind.

Es besteht insofern ein hohes Interesse daran, ein Gelenk für eine Vielzahl von Serien unterschiedlicher Schienenfahrzeugen verwenden zu können.

Zur Lösung der Aufgabe wird erfindungsgemäß vorgeschlagen, dass die Verbindung des Gelenks mit dem jeweiligen Fahrzeugteil durch einen zwischen Gelenk und dem jeweiligen Fahrzeugteil zwischengeschalteten Adapter vorgenommen ist. Das bedeutet, dass zwischen dem eigentlichen Gelenk, das der Übertragung von Nick-, Wank und Knickbewegungen dient, und dem jeweiligen Fahrzeugteil ein Adapter zwischengeschaltet ist. Nun ist bekannt, dass die Wagenkästen der Fahrzeugteile durchaus unterschiedlich sind. Insbesondere ist bekannt, dass der Abstand zweier Fahrzeugteile in Abhängigkeit von der Breite des Fahrzeugs ebenfalls stark unterschiedlich ist. Früher musste diesen Gegebenheiten dadurch Rechnung getragen werden, dass die Gelenke insbesondere unterschiedlich lang ausgebildet waren. Durch die Verwendung eines Adapters ist es nun möglich, beispielsweise in Bezug auf die Verwendung des Gelenkes in Gelenkfahrzeugen unterschiedlicher Breite, Adapter vorzusehen, die eine solche Länge aufweisen, dass ein genügender Abstand zwischen dem Gelenkmittelpunkt und der Stirnseite des Fahrzeugs verbleibt, ohne dass das Gelenk selbst verändert werden muss. Der Gedanke, der der Erfindung zugrunde liegt, besteht demzufolge darin, ein sogenanntes Baukastensystem bereitzustellen, bei dem ein einziges vorgefertigtes Gelenk Verwendung findet, wobei an dieses Gelenk Adapter unterschiedlicher Form und Größe angesetzt werden können, um den jeweiligen Gegebenheiten in Bezug auf die Fahrzeuggröße und den insbesondere damit einhergehenden minimalen Abstand zweier gelenkig miteinander verbundener Fahrzeug Rechnung zu tragen.

Vorteilhafte Merkmale der Erfindung sind den Unteransprüchen zu entnehmen.

So ist insbesondere vorgesehen, dass der Adapter am Gelenk lösbar befestigbar ist. Die Befestigung kann hierbei beispielsweise durch Schrauben erfolgen. Am Fahrzeugteil kann der Adapter angeschraubt oder mit dem Fahrzeugteil verschweißt sein.

In diesem Zusammenhang ist nach einem weiteren Merkmal der Erfindung vorgesehen, dass der Adapter zu beiden Enden eine Adapterplatte aufweist, die der Befestigung mit dem Gelenk oder dem Fahrzeugteil dient. Das heißt, dass bei einer Verbindung durch Schrauben die Adapterplatte eine Anzahl von Bohrungen aufweist, um die Verbindung mit einer korrespondierenden Fläche oder Platte am Gelenk bzw. mit dem Wagenkasten des Fahrzeugteils vorzunehmen.

Zur Übertragung der bei Fahrt auftretenden Kräfte, wie sie durch Wank-, Nick- und Knickbewegungen hervorgerufen werden, von den Fahrzeugteilen auf das Gelenk bzw. umgekehrt vom Gelenk auf das Fahrzeugteil ist vorteilhaft der Adapter in der Ansicht trapezförmig ausgebildet. Hierbei ist die Fläche der Adapterplatte des Adapters zur Befestigung am Gelenk kleiner ausgebildet, als die gegenüberliegende Adapterplatte zur Befestigung am Fahrzeugteil.

Nach einem weiteren besonderen Merkmal ist vorgesehen, dass mindestens die Adapterplatte zur Befestigung am Gelenk über Mittel zur Übertragung von Vertikal- und Horizontalkräften verfügt. Dies vor folgendem Hintergrund:
Es wurde bereits dargelegt, dass die Verbindung zwischen Gelenk einerseits und Adapter andererseits durch Schrauben erfolgt. Schrauben sind gemeinhin nicht in der Lage, Scherkräfte zu übertragen. Es bestünde nunmehr theoretisch die Möglichkeit, die Schrauben bis an die Streckgrenze anzuziehen, um somit einen Reibschluss zwischen der Adapterplatte des Adapters einerseits und der entsprechenden Anlagefläche am Gelenk andererseits zu bewirken. Es hat sich allerdings herausgestellt, dass die Schrauben dennoch häufig genug auf Scherung beansprucht werden, was unzulässig ist.

Um eine solche Beanspruchung auf Scherung zu vermeiden, sind nun - wie bereits ausgeführt - Mittel zur Übertragung von Vertikal- und Horizontalkräften zwischen dem Adapter einerseits und dem Gelenk andererseits vorgesehen. Hierbei kann das Mittel nach einem besonderen Merkmal der Erfindung mindestens einen Zapfen umfassen, der durch eine Öffnung in der Adapterplatte und dem Gelenk respektive dem Fahrzeugteil aufnehmbar ist. Das heißt der Zapfen, der über eine entsprechende Stärke verfügt, ist in der Lage, die auftretenden Scherkräfte nicht nur aufgrund der bei der Fahrt auftretenden Nick-, Wank- und Knickbewegungen aufzunehmen, sondern darüber hinaus zusätzlich auch noch die Aufsattellast.

In diesem Zusammenhang ist des Weiteren vorgesehen, dass der Zapfen in der jeweiligen Öffnung mit einem Presssitz einsitzt.

Anhand der Zeichnungen wird die Erfindung nachstehend beispielhaft näher erläutert.
Fig. 1 zeigt eine Draufsicht auf das Gelenk, wobei die Wagenkästen der beiden Fahrzeugteile angedeutet sind;
Fig. 2 zeigt einen Schnitt der Linie II - II aus Fig. 1;
Fig. 3 zeigt eine beispielhafte Ausführungsform eines Adapter in perspektivischer Darstellung.

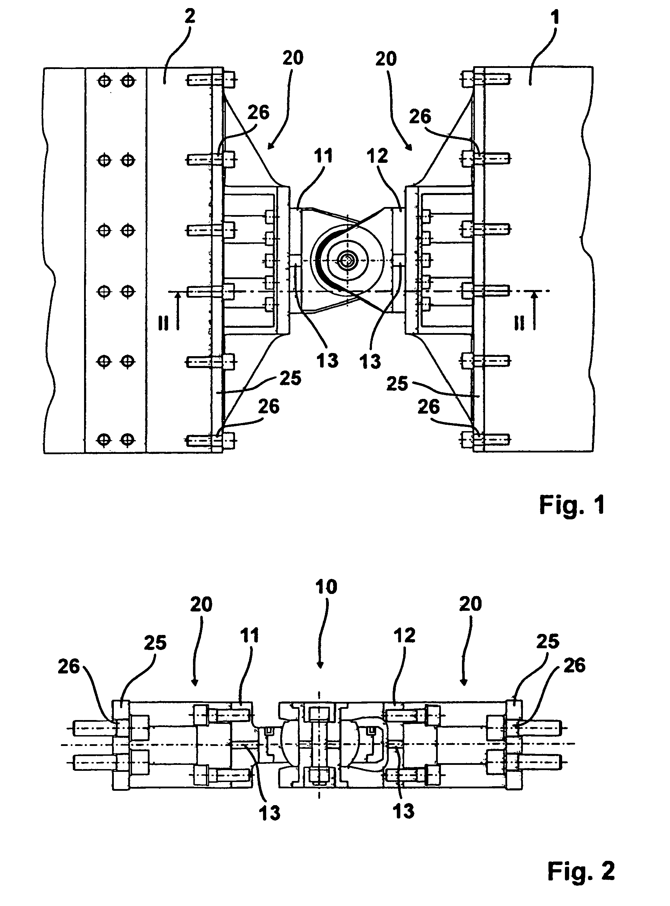

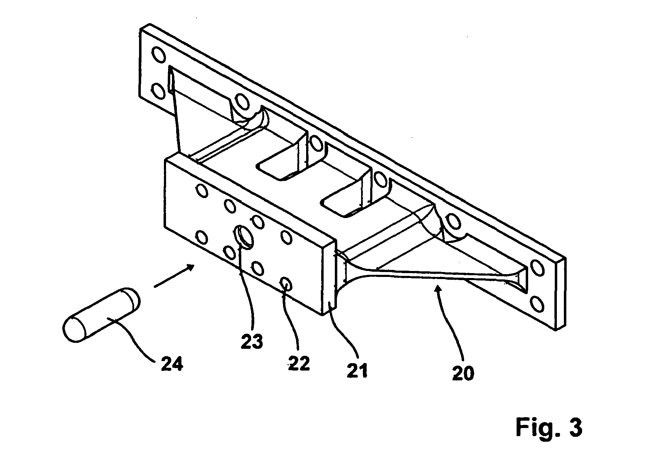

In der Darstellung gemäß Fig. 1 sind die Fahrzeugteile mit 1 und 2 bezeichnet. Zwischen den Wagenkästen der beiden Fahrzeugteile 1 und 2 befindet sich das insgesamt mit 10 bezeichnete Gelenk. Das Gelenk ist zu beiden Seiten jeweils durch einen Adapter 20 mit den Fahrzeugteilen 1 und 2 verbunden. Im Einzelnen ergibt sich aus der Fig. 1 und auch aus der Fig. 2 Folgendes:
Das Gelenk weist zu beiden Seiten eine Stirnplatte 11 und 12 auf. Die Stirnplatten 11 und 12 besitzen ein Lochmuster identisch wie die Adapterplatte 21 des Adapters 20 (Fig. 3). Die in der Adapterplatte 21 angeordneten Bohrungen 22 dienen der Aufnahme von Schrauben zur Verbindung mit der Stirnplatte 11, 12 des Gelenkes 10. Darüber hinaus ist eine Öffnung 23 erkennbar, wobei die Öffnung 23 der Aufnahme eines Zapfens 24 dient, der in die Öffnung zur Herstellung eines Presssitzes eingeschlagen wird. Parallel hierzu besitzt auch die Stirnplatte 11, 12 eine entsprechende Öffnung 13 zur Aufnahme eines solchen zuvor beschriebenen Zapfens 24.

Der Adapter 20, der in der Ansicht etwa trapezförmig ausgebildet ist, weist eine weitere Adapterplatte 25 auf, die ebenfalls über Bohrungen 26 mit entsprechenden Schrauben an dem Wagenkasten des Fahrzeugteils 1 oder 2 befestigt wird. Auch hier kann, gleichwohl dies nicht dargestellt ist, zwischen der Adapterplatte einerseits und der entsprechenden Aufnahme an der Stirnseite des Fahrzeug andererseits, ein Zapfen vorgesehen sein, um die auftretenden Vertikal- und Horizontalkräfte zu übertragen, um die Schrauben von solchen Kräften freizuhalten.

Darüber hinaus besteht die Möglichkeit, die Adapterplatte 25 nicht an dem Wagenkasten des Fahrzeugteils 1 oder 2 zu verschrauben, sondern an diesen anzuschweißen.

Der Adapter selbst kann als Schmiedeteil hergestellt sein, was den Vorteil hat, dass die Prüfung verhältnismäßig weniger aufwendig ist als dies der Fall ist bei einem Gussteil. Darüber hinaus lassen sich in einem Gesenk derartige Schmiedeteile bei entsprechender Stückzahl verhältnismäßig preiswert herstellen.

## Patentansprüche

1. Gelenkfahrzeug, insbesondere Schienenfahrzeug, wobei zwischen zwei Fahrzeugteilen (1, 2) ein die beiden Fahrzeugteile verbindendes Gelenk (10), das der Übertragung von Nick-, Wank- und Knickbewegungen dient, angeordnet ist,
**dadurch gekennzeichnet,**
**dass** die Verbindung des Gelenks (10) mit dem jeweiligen Fahrzeugteil (1, 2) durch einen zwischen Gelenk und dem jeweiligen Fahrzeugteil (1, 2) zwischengeschalteten Adapter (20) erfolgt.

2. Gelenkfahrzeug nach Anspruch 1,
**dadurch gekennzeichnet,**
**dass** der Adapter (20) an dem Gelenk lösbar befestigbar ist.

3. Gelenkfahrzeug nach wenigstens einem der voranstehenden Ansprüche,
**dadurch gekennzeichnet,**
**dass** der Adapter (20) am Fahrzeugteil (1, 2) angeschraubt oder angeschweißt ist.

4. Gelenkfahrzeug nach wenigstens einem der voranstehenden Ansprüche,
**dadurch gekennzeichnet,**
**dass** der Adapter (20) zu beiden Enden eine Adapterplatte (21) aufweist, die zur Befestigung an dem Gelenk (10) oder dem Fahrzeugteil (1, 2) dient.

5. Gelenkfahrzeug nach wenigstens einem der voranstehenden Ansprüche,
**dadurch gekennzeichnet,**
**dass** der Adapter (20) in der Ansicht trapezförmig ausgebildet ist.

6. Gelenkfahrzeug nach wenigstens einem der voranstehenden Ansprüche,
**dadurch gekennzeichnet,**
**dass** die Fläche der Adapterplatte (21) zur Befestigung des Gelenks (10) eine kleinere Fläche aufweist, als die andere Adapterplatte (21) zur Befestigung am Fahrzeugteil (1, 2).

7. Gelenkfahrzeug nach wenigstens einem der voranstehenden Ansprüche,
**dadurch gekennzeichnet,**
**dass** mindestens die Adapterplatte (21) zur Befestigung am Gelenk über Mittel zur Übertragung von Vertikal- und Horizontalkräften verfügt.

8. Gelenkfahrzeug nach wenigstens einem der voranstehenden Ansprüche,
**dadurch gekennzeichnet,**
**dass** das Mittel mindestens einen Zapfen (24) umfasst, der durch eine Öffnung (23) in der Adapterplatte und dem Gelenk oder dem Fahrzeugteil aufnehmbar ist.

9. Gelenkfahrzeug nach wenigstens einem der voranstehenden Ansprüche,
**dadurch gekennzeichnet,**
**dass** der Zapfen (24) in der jeweiligen Öffnung (23) mit einem Presssitz einsitzt.

## Claims

1. An articulated vehicle, more specifically a rail vehicle, an articulation being disposed between two vehicle parts (1, 2), which connects the two vehicle parts,
**characterized in that,**
the connection of the articulation (10), which serves to transmit pitch, rolling and bending motions, with the respective vehicle part (1, 2) occurs by means of an adapter interposed between the articulation and the respective vehicle part (1, 2).

2. The articulated vehicle according to claim 1,
**characterized in that**
the adapter (20) is removably attachable to the articulation.

3. The articulated vehicle according to at least one of the aforementioned claims,
**characterized in that t**
the adapter (20) is screwed or welded onto the vehicle part (1, 2).

4. The articulated vehicle according to at least one of the aforementioned claims,
**characterized in that**
at both ends, the adapter has an adapter plate (21), which serves for the attachment to the articulation (10) or the vehicle part (1, 2).

5. The articulated vehicle according to at least one of the aforementioned claims,
**characterized in that**
in a view, the adapter (20) is trapeze-shaped.

6. The articulated vehicle according to at least one of the aforementioned claims,
**characterized in that**
the surface of the adapter plate (21) for attaching the articulation has a smaller area than the other adapter plate (21) for attaching to the vehicle part (1, 2).

7. The articulated vehicle according to at least one of the aforementioned claims,
**characterized in that**
at least the adapter plate (21) for attaching to the articulation comes with means for transmitting vertical and horizontal forces.

8. The articulated vehicle according to at least one of the aforementioned claims,
**characterized in that**
the means comprises at least one pin (24), which is receivable by an aperture (23) in the adapter plate and the articulation or the vehicle part.

9. The articulated vehicle according to at least one of the aforementioned claims,
**characterized in that**
the pin (24) is press-fitted in the respective aperture (23).

## Revendications

1. Véhicule articulé, en particulier véhicule ferroviaire, dans lequel une articulation (10), qui sert à la transmission des mouvements de tangage, de roulis et de lacet, est disposée entre deux parties du véhicule (1, 2)
**caractérisé en ce que**
l'assemblage de l'articulation (10) à chaque partie du véhicule (1, 2) est réalisé par un adaptateur (20) intercalé entre l'articulation et la partie considérée (1, 2) du véhicule.

2. Véhicule articulé selon la revendication 1,
**caractérisé en ce que**
l'adaptateur (20) peut être fixé à l'articulation de façon démontable.

3. Véhicule articulé selon au moins l'une des revendications précédentes,
**caractérisé en ce que**
l'adaptateur (20) est boulonné ou soudé à la partie de véhicule (1, 2).

4. Véhicule articulé selon au moins l'une des revendications précédentes,
**caractérisé en ce que**
l'adaptateur (20) comporte à chacune des deux extrémités une plaque d'adaptateur (21) qui sert à la fixation à l'articulation (10) ou à la partie de véhicule (1, 2).

5. Véhicule articulé selon au moins l'une des revendications précédentes,
**caractérisé en ce que,**
en élévation, l'adaptateur (20) est de forme trapézoïdale.

6. Véhicule articulé selon au moins l'une des revendications précédentes,
**caractérisé en ce que**
la surface de la plaque d'adaptateur (21) pour la fixation de l'articulation (10) comporte une plus petite surface que l'autre plaque d'adaptateur (21) pour la fixation à la partie de véhicule (1, 2).

7. Véhicule articulé selon au moins l'une des revendications précédentes,
**caractérisé en ce que**
au moins la plaque d'adaptateur (21) pour la fixation à l'articulation est pourvue de moyens pour la transmission de forces verticales et horizontales.

8. Véhicule articulé selon au moins l'une des revendications précédentes,
**caractérisé en ce que**
le moyen comprend au moins un tourillon (24) qui peut être logé à travers une ouverture (23) ménagée dans la plaque d'adaptateur et dans l'articulation ou dans la partie de véhicule.

9. Véhicule articulé selon au moins l'une des revendications précédentes,
**caractérisé en ce que**
le tourillon (24) est monté à ajustement serré dans l'ouverture (23) correspondante.
